# EUROPÄISCHE PATENTANMELDUNG

(11) **EP 0 783 832 A2**
(43) Veröffentlichungstag der Anmeldung: **16.07.1997**
(21) Anmeldenummer: 97100100.3
(22) Anmeldetag: 07.01.1997
(51) Int. Cl.: A01G 9/02

(54) **Pflanztopf mit Untersatz**

(30) Priorität: 09.01.1996 DE 19600508; 11.07.1996 DE 19628027
(71) Anmelder: Haymann, Margrit, 57627 Hachenburg (DE)
(72) Erfinder: Haymann, Margrit, 57627 Hachenburg (DE)
(74) Vertreter: Kossobutzki, Walter, Dipl.-Ing.(FH)

(57) **Zusammenfassung**

Die Erfindung bezieht sich auf eine Vorrichtung zur Aufnahme von in Erde einsetzbaren Pflanzen, insbesondere Grün- oder Zimmerpflanzen, bestehend aus einem die Pflanze aufnehmenden Pflanztopf mit mindestens einer bodenseitigen Wasseraustrittsöffnung und aus einem Untersatz mit einem hochgezogenen, umlaufenden Kragen.

Um sicherzustellen, daß zuviel zugeführtes Gießwasser problemlos ablaufen kann, so daß die Pflanze keine "nassen Füße" mehr bekommt und dadurch Schaden erleidet und sich die Verwendung von Tongranulat oder Tonkugeln dabei erübrigt, ist der obere Rand (9) des Kragens (7) dem Boden (2) des Pflanztopfes (1) angepaßt und der Pflanztopf (1) stützt sich direkt auf dem oberen Rand (9) des Kragens (7) ab.

## Beschreibung

Die Erfindung bezieht sich auf eine Vorrichtung zur Aufnahme von in Erde einsetzbaren Pflanzen, insbesondere Grün- oder Zimmerpflanzen, bestehend aus einem die Pflanze aufnehmenden Pflanztopf mit mindestens einer bodenseitigen Wasseraustrittsöffnung und aus einem Untersatz mit einem hochgezogenen, umlaufenden Kragen.

Es ist bekannt, Grün- oder Zimmerpflanzen mittels Erde in einen aus Ton bestehenden Pflanztopf einzusetzen. Ein derartiger Pflanztopf ist in seinem Boden mit mindestens einer Öffnung versehen, über die bei einem Gießvorgang zuviel zugeführtes Wasser abfließen kann. Zum Auffangen des zuviel zugeführten Wassers wird ein solcher Pflanztopf entweder auf einen schalenartigen, meist unschön aussehenden Untersatz oder in einen besonderen Kübel, auch Übertopf genannt, gesetzt. Der Untersatz und der Kübel bzw. Übertopf können zwar eine gewisse Menge an überschüssigem Wasser ohne Beeinträchtigung der Pflanze aufnehmen. Wird jedoch der Pflanze erheblich mehr Wasser zugeführt als dieselbe benötigt, führt dies dazu, daß das Wasser im Untersatz oder im Kübel bzw. Übertopf eine gewisse Höhe überschreitet. Das bedeutet, daß dann noch ein Teil der im Pflanztopf befindlichen Erde im überschüssigen Wasser steht, so daß die Pflanze sogenannte "nasse Füße" bekommt. Dies kann in gewissen Fällen dazu führen, daß die Pflanze bzw. deren Wurzeln verfaulen. Dieses Problem läßt sich teilweise, jedoch nicht vollständig, dadurch beseitigen, daß man in den Pflanztopf vor dem Einfüllen der Erde eine Schicht aus geschäumten Tonkugeln bzw. Tongranulat einfüllt, durch die die Wurzeln der eingesetzten Pflanze zunächst nicht mit dem im Untersatz oder Kübel stehenden Wasser in Berührung kommen. Nach und nach dringen jedoch die Wurzeln der Pflanze zwischen das Tongranulat, so daß dann wieder das gleiche Problem auftritt. Darüberhinaus haben die bekannten Pflanztöpfe und Untersätze den Nachteil, daß sie unschön aussehen und keine optische Einheit bilden.

Es ist zwar möglich, die Pflanze direkt mittels der Erde in den Kübel bzw. Übertopf einzusetzen. Auch dabei besteht die Möglichkeit, im unteren Bereich des Kübels bzw. Übertopfes eine Schicht aus geschäumtem Tongranulat bzw. Tonkugeln vorzusehen. Überschüssiges Wasser bleibt hier, da der Kübel bzw. Übertopf keine Öffnung im Boden besitzt - im Kübel stehen und kann dann, wenn zuviel Wasser zugeführt wird, ebenfalls zu "nassen Füßen" der Pflanze und damit zu einem Verfaulen derselben führen. Die Verwendung von Kübeln bzw. Übertöpfen hat, mit und ohne Pflanztopf, den Nachteil, daß man dabei die Höhe des im Kübel stehenden Wassers mit dem Auge nicht wahrnehmen kann. Dabei ist auch zu berücksichtigen, daß nicht immer dann geschäumte Tonkugeln oder geschäumtes Tongranulat vorhanden ist, wenn Pflanzen in einem Pflanztopf oder in einem Kübel bzw. Übertopf mittels Erde eingesetzt bzw. eingepflanzt werden.

Der Erfindung liegt deshalb die Aufgabe zugrunde, eine Vorrichtung zur Aufnahme von Pflanzen zu schaffen, die sicherstellt, daß zuviel zugeführtes Gießwasser problemlos ablaufen kann, so daß die Pflanze keine "nassen Füße" mehr bekommt und dadurch Schaden erleidet. Die Verwendung von Tongranulat oder Tonkugeln soll sich dabei erübrigen.

Zur Lösung dieser Aufgabe wird gemäß der Erfindung bei einer Vorrichtung der eingangs beschriebenen Gattung vorgeschlagen, daß der obere Rand des Kragens dem Boden des Pflanztopfes angepaßt ist und sich der Pflanztopf direkt auf dem oberen Rand des Kragens abstützt.

Bei der erfindungsgemäßen Vorrichtung bilden Pflanztopf und Untersatz eine funktionale und optische Einheit, wobei der Pflanztopf ähnlich wie ein Kübel bzw. Übertopf schön ausgestaltet bzw. geformt werden kann. Auch der Untersatz kann besonders schön geformt und ausgestellt sein. Überschüssiges Gießwasser kann in den topfartigen Untersatz ablaufen, aus dem es bei Bedarf problemlos zu entfernen ist. Tongranulat oder Tonkugeln werden nicht mehr benötigt.

Weitere Merkmale einer Vorrichtung gemäß der Erfindung sind in den Ansprüchen 2 bis 11 offenbart.

Die Erfindung wird nachfolgend anhand in einer Zeichnung dargestellter Ausführungsbeispiele näher erläutert. Dabei zeigen
- Fig. 1: eine aus Pflanztopf und Untersatz bestehende Vorrichtung gemäß der Erfindung und
- Fign. 2 bis 4: Beispiele einer möglichen Formgebung von Pflanztopf und Untersatz.

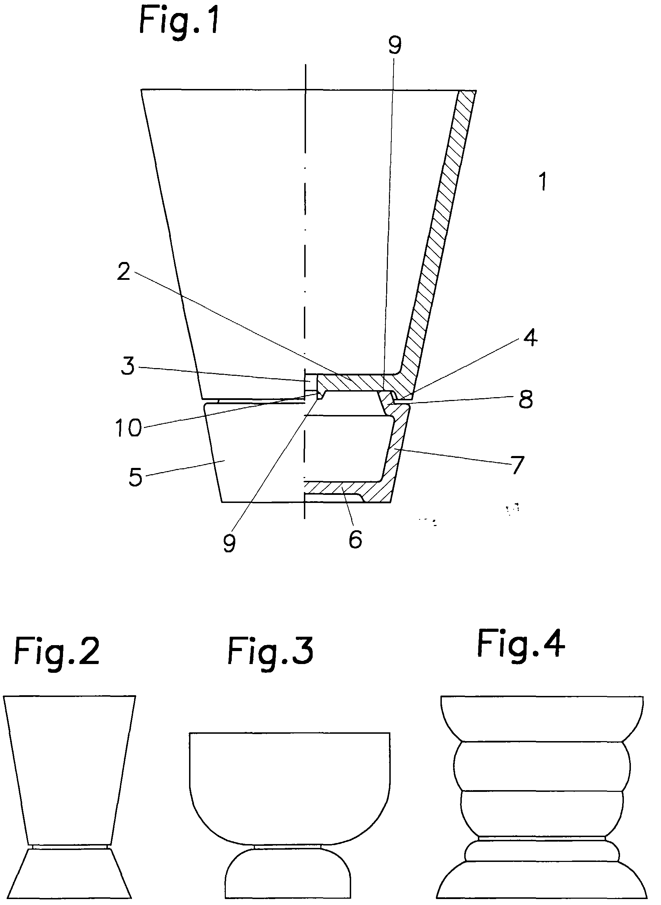

In der Fig. 1 der Zeichnung ist ein Pflanztopf 1 im Halbschnitt gezeigt, der einen sich konisch nach oben erweiternden Querschnitt besitzt und der bis kurz unter seinen oberen Rand mit Erde bzw. Pflanzerde gefüllt sein kann. In diese Erde wird dann in an sich bekannter Weise eine Grün- oder Zimmerpflanze eingesetzt bzw. eingepflanzt. Sowohl die Erde als auch die Zimmerpflanze sind der Einfachheit halber in der Zeichnung nicht dargestellt. Der Pflanztopf weist beispielsweise eine kreisförmige Grundfläche auf.

Der Pflanztopf 1 besitzt einen Boden 2, in den mindestens eine Wasserablauföffnung 3 eingearbeitet ist. Unterhalb des Bodens 2 ist am Rand des Pflanztopfes 1 ein ringartiger Vorsprung 4 vorgesehen. Der Pflanztopf 1 stützt sich in diesem Ausführungsbeispiel auf einem keramischen Untersatz 5a, 5b, der aus einem Boden 6 und einem hochgezogenen, Kragen 7 mit einem umlaufenden oberen Rand 9 besteht. Im dargestellten Ausführungsbeispiel erweitert sich der Kragen 7 konisch nach oben, wobei die Konizität des Untersatzes 5 mit der Konizität des Pflanztopfes 1 übereinstimmt und die Umfangsflächen fluchtend ineinander übergehen.

Im Ausführungsbeispiel der Fig. 1 geht der Kragen 7 geht an seinem freien Ende in eine stufenartige Einschnürung 8 über, auf deren freiem Rand 9 sich der Boden 2 des Pflanztopfes 1 abstützt. Die Größe und die Form der stufenartigen Einschnürung 8 sind in vorteilhafter Weise so bemessen, daß sich der ringartige Vorsprung 4 außerhalb der stufenartigen Einschnürung 8 befindet und die Einschnürung 8 somit eine gewisse Führung für den Pflanztopfes 1 darstellt. Im gezeichneten Ausführungsbeispiel liegt der ringartige Vorsprung 4 nicht am Untersatz 5 an. Es ist jedoch auch möglich, den Pflanztopf 1 und den Untersatz 5 so zu formen, daß der ringartige Vorsprung 4 des Pflanztopfes 1 sich auf dem Untersatz abstützt und das freie Ende der stufenartigen Einschnürung 8 einen geringen Abstand vom Boden 2 des Pflanztopfes 1 aufweist. Ferner ist es möglich, den Bodenbereich des Pflanztopfes 1 so auszugestalten, daß derselbe mit einem umlaufenden, vorstehenden Rand in den Kragen 7 des Untersatzes 5 ragt. Die stufenartige Einschnürung 8 kann dann entfallen.

Die Verwendung eines solchen Untersatzes 5 in Verbindung mit dem Pflanztopf 1 stellt sicher, daß überschüssiges Gießwasser über die Wasseraustrittsöffnung 3 in das Innere des Untersatzes 5 ablaufen kann. Das darin befindliche Wasser kann dann problemlos entfernt werden. Es ist jedoch auch möglich, das Wasser im Untersatz 5 zu belassen, welches dann bei seiner Verdunstung über die Wasseraustrittsöffnung 3 wieder an die Erde der Pflanze gelangt. Die gefäßartige Ausgestaltung des Untersatzes 5 gibt schließlich aber auch die Möglichkeit, denselben für die Bewässerung der Pflanze über einen längeren Zeitraum, beispielsweise während eines Urlaubes, sicherzustellen. Dazu ist es lediglich erforderlich, in die Erde des Pflanztopfes 1 eine wasseransaugende Schnur einzulegen, die durch die Wasseraustrittsöffnung 3 bis auf den Boden 6 des Untersatzes 5 ragt. Wird nun der Untersatz 5 mit Wasser gefüllt, kann sich die Pflanze das benötigte Wasser selbst ansaugen, so daß in einem solchen Fall über einen längeren Zeitraum eine ausreichende Bewässerung der Pflanze sichergestellt ist.

Um auszuschließen, daß das durch die Wasseraustrittsöffnung 3 nach unten abfließende, überschüssige Gießwasser durch Adhäsionskräfte an der Unterseite des Bodens 2 nach außen abfließen und dort außerhalb des Untersatzes 5 abtropfen kann, ist an der Unterseite des Bodens 2 um die Wasseraustrittsöffnung 3 eine besondere Abtropfkante 9 ausgebildet, die im dargestellten Ausführungsbeispiel durch einen umlaufenden Abtropfring 10 geformt ist. Diese Abtropfkante 9 kann sich, wie dargestellt, direkt an die Wasseraustrittsöffnung 3 anschließen oder mit Abstand davon, beispielsweise kurz vor dem ringartigen Vorsprung 4, angeordnet sein. Auch eine andere Ausgestaltung der Abtropfkante 9 ist möglich. Bedarfsweise kann die Abtropfkante 9 auch durch eine umlaufende Rille an der Unterseite des Bodens 2 geformt sein.

Dieser Effekt, daß das nach unten durch die Wasseraustrittsöffnung 3 abfließende Gießwasser nicht nach außen abläuft und dort abtropft, kann beispielsweise auch dann erreicht werden, wenn der Boden 2 geringfügig zur Wasseraustrittsöffnung 3 nach unten geneigt verläuft.

Im dargestellten Ausführungsbeispiel sind sowohl der Pflanztopf 1 als auch der Untersatz 5 aus keramischen Werkstoff gefertigt, wobei die sichtbaren Flächen in vorteilhafter Weise mit einer Glasur versehen sind. Auch die Verwendung von anderen Werkstoffen, beispielsweise Glas, Porzellan oder Kunststoff, für den Pflanztopf 1 und/oder Untersatz 5 ist möglich. Der Pflanztopf 1 und der Untersatz 5 können eine beliebige Grundfläche bzw. einen beliebigen horizontalen Querschnitt aufweisen. Die Grundfläche kann dabei neben rund auch oval, drei- oder mehreckig sein. Auch die äußere Querschnittsform kann, wie die Fign. 2 bis 4 als Beispiele zeigen, weitgehend beliebig gewählt werden, wobei jedoch nach Möglichkeit sichergestellt sein sollte, daß zwischen dem Pflanztopf 1 und dem Untersatz 5 ein harmonischer Übergang stattfindet, so daß der Pflanztopf 1 und der Untersatz 5 eine funktionelle und optische Einheit bilden. Auch die Farbe oder die dekorative Bemalung des Pflanztopfes 1 und des Untersatzes 5 kann beliebig gewählt werden.

## Patentansprüche

1. Vorrichtung zur Aufnahme von in Erde einsetzbaren Pflanzen, insbesondere Grün- oder Zimmerpflanzen, bestehend aus einem die Pflanze aufnehmenden Pflanztopf mit mindestens einer bodenseitigen Wasseraustrittsöffnung und aus einem Untersatz mit einem hochgezogenen, umlaufenden Kragen,
dadurch gekennzeichnet,
daß der obere Rand (9) des Kragens (7) dem Boden (2) des Pflanztopfes (1) angepaßt ist und sich der Pflanztopf (1) direkt auf dem oberen Rand (9) des Kragens (7) abstützt.

2. Vorrichtung nach Anspruch 1,
dadurch gekennzeichnet,
daß der Kragen (7) an seinem freien Ende eine stufenartigen Einschnürung (8) aufweist.

3. Vorrichtung nach Anspruch 2,
dadurch gekennzeichnet,
daß die stufenartige Einschnürung (8) innerhalb eines am Kübel (1) ausgebildeten, ringartigen Vorsprunges (4) am Kübel (1) anliegt.

4. Vorrichtung nach mindestens einem der Ansprüche 1 bis 3,
dadurch gekennzeichnet,
daß die bodenseitige Wasseraustrittsöffnung (3) von einer Abtropfkante (9) umschlossen ist.

5. Vorrichtung nach Anspruch 4,
dadurch gekennzeichnet,
daß sich die Abtropfkante (9) direkt an die Wasseraustrittsöffnung (3) anschließt.

6. Vorrichtung nach Anspruch 4 oder 5,
dadurch gekennzeichnet,
daß die Abtropfkante (9) von einem umlaufenden Abtropfring (10) gebildet ist.

7. Vorrichtung nach mindestens einem der Ansprüche 1 bis 6,
dadurch gekennzeichnet,
daß der Untersatz (5) als weitgehend geschlossenes Gefäß mit einer an der Oberseite angeordneten Öffnung ausgebildet ist.

8. Vorrichtung nach mindestens einem der Ansprüche 1 bis 7,
dadurch gekennzeichnet,
daß der Untersatz (5) eine runde, ovale, drei- oder mehreckige Grundfläche aufweist.

9. Vorrichtung nach mindestens einem der Ansprüche 1 bis 8,
dadurch gekennzeichnet,
daß der Untersatz (5) einen rechteckigen, trapezförmigen oder gerundeten Querschnitt aufweist.

10. Vorrichtung nach mindestens einem der Ansprüche 1 bis 9,
dadurch gekennzeichnet,
daß der Untersatz (5) aus keramischem Werkstoff, Glas, Porzellan, Kunststoff oder Metall gebildet ist.

11. Vorrichtung nach mindestens einem der Ansprüche 1 bis 10,
dadurch gekennzeichnet,
daß der Untersatz (5) und der Kübel (1) aus gleichem Werkstoff gebildet sind.
